# EUROPÄISCHE PATENTSCHRIFT

(11) **EP 1 366 668 B1**
(45) Veröffentlichungstag und Bekanntmachung des Hinweises auf die Patenterteilung: **06.09.2006**
(21) Anmeldenummer: 02028363.6
(22) Anmeldetag: 17.12.2002
(51) Int. Cl.: A21D 2/36, A21D 13/02

(54) **Vorteigkonzentrat für hefegetriebene Backwaren**
Predough concentrate for yeast fermented bakery products
Concentré de pâte pour produits de boulangerie à pâte levée

(30) Priorität: 28.05.2002 CH 8922002; 09.07.2002 CH 12072002
(43) Veröffentlichungstag der Anmeldung: 03.12.2003
(73) Patentinhaber: PANADORO GROUP AG, 6300 Zug (CH)
(72) Erfinder: Burgermeister, René, 9507 Stettfurt (CH); Zehnder, Bruno, Wilen b. Wil (CH); Grootes, Meiert J., 6332 Hagendorn (CH)
(74) Vertreter: Frommhold, Joachim

(56) Entgegenhaltungen:
- EP-A- 0 152 943
- WO-A-01/21012
- DE-A- 2 837 294
- DE-A- 3 504 596
- US-A- 4 500 558
- US-A- 4 526 800

## Beschreibung

Die vorliegende Erfindung betrifft ein Vorteigkonzentrat zur Herstellung von ganz oder teilweise hefegetriebenen Backwaren gemäß Oberbegriff des Patentanspruches 1 bzw. einen Vorteig, ein Verfahren zur Herstellung eines Vorteigkonzentrates gemäß Oberbegriff des Anspruches 11, sowie die Verwendung eines solchen Vorteigkonzentrates zur Herstellung von Backwaren gemäß Anspruch 16 und Backwaren, welche mit einem solchen Vorteigkonzentrat hergestellt sind, gemäß Oberbegriff des Anspruchs 14.

Erst im 18. und 19. Jahrhundert entstanden die hochgezogenen Brote mit porenreicher Krume, wie sie heute noch allgemein bekannt sind. Unter Verwendung von Hefe, die vor ca. 150 Jahren in Wien erfunden wurde, wurde aus Mehl und Wasser ein Hebel oder Vorteig hergestellt, der meistens über Nacht bei Raumtemperatur in speziellen Behältnisse fermentiert wurde. Dadurch wurde die damals schwach treibende Hefe vermehrt und in ihrer Leistung gestärkt. Mengenmäßig macht der Vorteig 25-40% der Gesamtteigmenge aus.

Der Vorteig hat generell folgende Funktionen:
- Bildung von Milch- und Essigsäuren zur Kleberstabilisierung, zur Verbesserung der Brotfrischhaltung, sowie zum Schutz vor dem Fadenbazillus;
- Hefevermehrung;
- Bessere Einlagerung des Wassers durch die Vorquellung und Aufschließung der kleberbildenden Eiweißstoffe;
- Bildung von Vorstufen von Brotaromastoffen durch den enzymatischen Abbau von Eiweiß, Fett und Stärke.

Dadurch war es schon damals möglich, voluminöse, aromatische und mehrere Tage haltbare Brote zu produzieren.

In den 50er-Jahren des letzten Jahrhunderts begann mit der zunehmenden Industrialisierung die Ära der Backmittel. Anfangs waren es reine Malzprodukte und Säuren, z.B. Essig. Diese dienten zur Verbesserung von qualitativ schlechten Weizen- und Roggenmehlen und wurden direkt dem Hauptteig zugesetzt. Anfang der 70er-Jahre haben Bäckereien aus organisatorischen-und Kapazitätsgründen sukzessive auf die direkte Teigführung d.h. ohne Vorteig umgestellt. Ohne die Zugabe von Backmitteln konnte dieser Schritt von indirekter auf direkte Teigführung damals nicht vollzogen werden. Die für diesen Zweck benötigten Backmittel bestanden meistens aus Malzprodukten, vielfach ergänzt mit Säuren (z.B. Zitronensäure (E330), Ascorbinsäure (E300)), Calciumphosphaten (E341), und Lecithin (E322) als Emulgator. Die heutigen Backmittel entsprechen noch weitgehend dieser Zusammensetzung. Anstatt Malzprodukte und Lezithin wird heute eine Kombination von biotechnologisch hergestellten Enzymen, Quellstoffe wie Weizenquellmehl oder Guarkemmehl (E412) und/oder Emulgatoren wie z.B. Diacetylweinsäureester (E472e), destillierte Monoglyzeriden (E471) usw., eingesetzt.

Skandale in der Nahrungsmittelindustrie haben dazu geführt, daß der Konsument vermehrt natumahe Produkte sucht. Das Umsatzwachstum bei Bioprodukten in den letzten Jahren belegt diese Entwicklung. Insbesondere bei Produkten des täglichen Bedarfs, wie z.B. Brot, kommt daher vermehrt der Wunsch, diese ohne Backmittel herzustellen. Nicht nur die Staubbildung bei der Anwendung (Allergien), sondern auch die vielen unerwünschten, oft sogar als gesundheitsschädlich empfundenen Zusatzstoffen führen zu einer immer stärkerer Ablehnung dieser Produkten.

Eine von den wenigen Möglichkeiten, Brot ohne Backmittel herzustellen, ist die klassische Hebel- oder Vorteigmethode. Grundsätzlich hat Vorteig gegenüber Backmittel Vorteile in Bezug auf Geschmack, Geruch, Krumenbeschaffenheit und Frischhaltung.

Es gibt dabei eine Methode der Vorteigherstellung (unter Verwendung von Mehl-Komponenten) mit und eine ohne zugesetzter Hefe zur Vorteigherstellung. die Methode mit zugesetzter Hefe ist heute am weitesten verbreitet, da die Alternativmethode ohne Zugabe von Hefe, wie z.B. bei der Madre-/Sauerteigherstellung, wesentlich aufwendiger in der Durchführung ist.

Trotz dieser Vorteile ist der Einsatz von Vorteig sowohl bei handwerklichem als auch bei Industriebetrieben nach wie vor beschränkt. dies wird vor allem verursacht durch folgende Voraussetzungen, die für eine optimale Vorteigproduktion gegeben sein müssen; stabile Mikro-Flora vom Vorferment (nur bei Madre), eine konstante Qualität der Rohstoffe (vor allem des Mehls - enzymatische Aktivität, Aschegehalt usw.), eine genaue Überwachung der Fermentationsparameter (wie Temperatur, zeit), eine strikte Hygienekontrolle, eine permanente Analyse von pH, Säuregrad und Aroma, gut ausgebildetes Personal, genaueste Produktionsplanung (kleine Flexibilität) und bei Industriebetrieben hohe Investitionskosten. Außerdem ist zu berücksichtigen, dass die benötigte Vorteigmenge ca. 25-40% der Gesamtteigmenge beträgt, weswegen es sich bereits bei einem kleineren Bäckereibetrieb um große Mengen Hebel handelt, die hergestellt werden müssen. Eine unkontrollierte Fermentation führt zu einer unregelmässigen Gebäckqualität, Nebengeschmack, geringem Brotvolumen und eventuell sogar zu einer starken Übersäuerung des Brotes. Nicht zuletzt wurde in der Praxis festgestellt, dass mit Hebel hergestellte Teige und Gebäcke nicht immer sämtliche gewünschten Eigenschaften im Vergleich zu Backmittel-Teigen aufweisen. ist dies der Fall, so kann die Backmittelmenge nur reduziert, aber nicht eliminiert werden.

Die DE-A-35 04 596 offenbart ein Verfahren zur Herstellung von Brot, bei dem die Hauptkomponenten gequetschte Haferkörner und gereinigte Kleie zunächst einer Wärmebehandlung unterzogen werden müssen. Dabei werden die Haferflocken in Wasser von 40 bis 60°C eingeweicht und aufgrund der angegebenen Wassermengen von ca. 1 Liter pro kg Haferflocken steht eine grosse Wassermenge für die Haferflocken zur Verfügung, sodass diese mit Wasser überdeckt sind. Die eingeweichten Haferflocken sollen 12 Stunden quellen wobei eine Abkühlung auf ca. 20 bis 25°C erfolgen soll.

Die Weizenkleie, die mit nahezu kochendem Wasser oder sogar mit siedendem Wasser überbrüht wird, wird ebenfalls 12 Stunden stehen gelassen. Auch die Kleie ist dabei von Wasser bedeckt, die Wassermengen pro kg Kleie sind ca. doppelt so hoch wie bei den Haferflocken. Die eingerührte Kleie soll innerhalb der Abstehzeit auf Raumtemperatur kühlen. Die so vorbehandelten Haferflocken und die Kleie werden ohne Abtrennung des Vorbehandlungswassers gemischt, wobei Bäckerhefe und Salz zugesetzt werden. Ausserdem werden 15 bis 25 Gew.-% Sauerteig hinzugefügt.

Gemäss EP-A-0 152 943 wird eine Mischung aus 40% Roggenmehl und 60% Weizenkleie bis auf 180°C erhitzt und extrudiert. Das Extrudat in Form von Granulat wird vermahlen und dem weiteren Backprozess zugeführt. Zunächst erfolgt ein Mischen mit Roggenmehl, salz, Sauerteig und Wasser. Beim Mischen der Komponenten darf die Temperatur auf ca. 30°C ansteigen, doch wird bereits nach einer Stunde der Backprozess vollzogen.

Die WO94/00994 offenbart einen fermentierten Sauerteig, bestehend aus einem Treibmittel, vermahlenen Getreidekörnern und max. 32% Wasser mit einem pH-Wert kleiner 4,2. Der Teig wird zunächst über 8 - 24 Stunden bei 20 bis 40°C fermentiert und anschliessend wird ein Teil mit Mehl und/oder Kleie vermischt bis ein Wassergehalt von 58 - 63% erreicht ist. Danach soll dieser Teil des Teiges weitere 2-12 Stunden fermentieren und nachfolgend mit Mehl und/oder Kleie vermischt werden, so dass er anschliessend weitere 3 bis 6 Tage fermentieren kann, bis ein pH-Wert von 3,8 - 4,0 erreicht wird/ist.

Aus den obenerwähnten Gründen besteht das Bedürfnis, nach einer geeigneten Alternative sowohl für Backmittel, als auch für den aus dem Stand der Technik bekannten Vorteig. Es ist daher eine Aufgabe der vorliegenden Erfindung, eine Zusammensetzung zur Verfügung zu stellen, die die oben genannten Nachteile von herkömmlichen Vorteigen und Backmitteln bei der Herstellung von Gebäcken nicht aufweist. Zudem sollen vorteilhafte Verwendungen derartiger erfindungsgemäßer Zusammensetzung zur Herstellung von Backwaren zur Verfügung gestellt werden.

Die erfindungsgemäße Zusammensetzung in Form eines erfindungsgemäßen Vorteigkonzentrats soll in Hinblick auf die Anwendung in Bäckereien eine geringe Dosierung (3% bis max. 5%, vorzugsweise 4% bei der Paste und 6% bis max. 10%, vorzugsweise 8% bei der Suspension, jeweils bezogen auf die Gesamtmehlmenge im Endprodukt), eine einfache Handhabung und nicht zuletzt eine genügende Haltbarkeit aufweisen. Des weiteren soll die Akzeptanz des Vorteigkonzentrates durch sehr gute Verarbeitungseigenschaften (kurze Teigreifezeit), eine Verbesserung der backtechnischen Eigenschaften (schneller und starker Ofentrieb, großes Backvolumen, schöne Krustenfärbung), eine Verbesserung der sensorischen Eigenschaften (Geruch, Geschmack, Kauempfinden) sowie eine längere Frischhaltung erhöht werden.

Schließlich wird ein breites Einsatzgebiet, insbesondere für die Herstellung von Backwaren, d.h. in verschiedensten Rezepturen mit unterschiedlichen hinzuzufügenden Mehltypen und Mehlqualitäten, angestrebt. Dies wird nicht zuletzt durch die brottypspezifische Geschmacksverstärkung ermöglicht, bspw. wird Ruchbrot im Ruchbrotgeschmack, Weißbrot dagegen im Weißbrotgeschmack verstärkt

Erfindungsgemäß basiert die Zusammensetzung, insbesondere in Form eines Vorteigkonzentrats, auf einer Getreidekleie-Komponente. Hierbei handelt es sich um ein Nebenprodukt von Müllereien. Bei der Mehlherstellung fallen nämlich große Mengen Kleie an, die sich kommerziell nur unbefriedigend nutzen lassen. Zwar sind die ernährungsphysiologischen Vorteile von Kleie bekannt und allgemein akzeptiert, allerdings sind sie in höheren Dosen auf Grund ihres Geschmackes wenig beliebt. Getreide(speise)kleie besteht inhaltlich aus den Randschichten des Getreidekorns (welche insbesondere die Cellulose-haltige Samenschale, die Eiweiß-haltige und fetthaltige Aleuronschicht und den Keimling (enthält Fette, Proteine, Vitamine A, B, E u.ä.) aufweisen, wobei die Spelzen von Spelzgetreide nicht zu den Randschichten gezählt werden. Typischerweise enthält Rohkleie (so auch die in erfindungsgemässen Zusammensetzungen verwendete Rohkleine) - abhängig vom Mahlverfahren - zwischen 5 und 25 Gew.anteile, vorzugsweise zwischen 7 und 20 Gew.anteile Cellulose, zwischen 10 und 20 Gew.anteile Rohprotein, zwischen 1 und 10 Gew.anteile Rohfett, zwischen 10 und 20 Gew.anteile Stärke, zwischen 5 und 20 Gew.anteile Rohfaser, zwischen und Wasser sowie Rohasche als Restbestandteil sowie geringfügigen Anteilen an Nebenkomponenten (z.B. Vitamine (z.B.: B1, B2, B6, Folsäure), Metallsalze (z.B.: Eisen, Zink, Magnesium, Calzium, Aminosäuren (z.B. Lysin)). Die Berechnung der Anteile kann nach den Nährwerttabellen (Souci, Fachmann, Kraut; 1989) erfolgen.

Typische bevorzugte Getreidespeiserohkleine (nach Extraktion von zwischen 20 und 35% Aleuron) weist - wiederum abhängig vom Mahlverfahren - folgende Zusammensetzung auf: zwischen 1 und 25 Gew.anteile, vorzugsweise zwischen 7 und 20 Gew.anteile Cellulose, zwischen 10 und 25 Gew.anteile Rohprotein, zwischen 1 und 10 Gew.anteile Rohfett, zwischen 3 und 20 Gew.anteile Stärke, zwischen 5 und 20 Gew.anteile Rohfaser, und Wasser sowie Rohasche als Restbestandteil sowie geringfügige Anteile an Nebenkomponenten (z.B. Vitamine (z.B.: B1, B2, B6, Folsäure), Metallsalze (z.B.: Eisen, Zink, Magnesium, Calzium, Aminosäuren (z.B. Lysin)). Die Berechnung der Anteile kann nach den Nährwerttabellen (Souci, Fachmann, Kraut, 1989) erfolgen.

Bevorzugt ist, dass das für die Herstellung von Speisekleie verwendete Getreide besonders gut vor dem Mahlprozess gereinigt wird. Der Begriff "Rohkleie" als solcher steht im folgenden für Getreidespeisekleie (also das in der Mühle anfallende Nebenprodukt der Mehlherstellung), welche Kleie oder Kleiemischungen der wichtigsten Getreidearten umfasst, bspw. also Weizen oder Saatweizen (Triticum aestivum = T. vulgare), Hartweisen (T. turgidum: durum), Einkorn, Dinkel. Emmer; Gerste; Roggen; Hafer; Reis, Hirse und Mais oder auch Triticale (Kreuzung aus Weizen und Roggen) oder Sorghum. Hiervon abzugrenzen sind erfindungsgemäß weiterverarbeitete Formen der Rohkleie (als zunächst, wie oben definiert, unmittelbares Nebenprodukt des Müllereibetriebs), die im folgenden als _{"}behandelte Kleie" (nach dem ersten Verarbeitungsschritt) und als "behandelte, mit Wasser versetzte Kleie" (nach dem zweiten Verarbeitungsschritt) bezeichnet werden.

Es gibt verschiedene Möglichkeiten, Getreide(speise)rohkleie durch Weiterverar: beitung für die Verwendung in der erfindungsgemäßen Zusammensetzung (bspw. im erfindungsgemäßen Vorteigkonzentrat) zur Verfügung zu stellen. Zu nennen sind insbesondere eine mechanische Modifizierung der im Müllereibetrieb anfallenden Rohkleie durch Feinzerkleinerung, weiterhin eine thermische Modifizierung, vorzugsweise durch eine thermopneumatische Behandlung, und schließlich bspw. auch eine mechanisch-thermische Modifizierung durch Extrusion. Solchermaßen erfindungsgemäß mechanisch, thermisch oder mechanisch-thermisch modifizierte Kleie wird im Rahmen der vorliegenden Erfindung stets als "behandelte Kleie" bezeichnet. Auf diese Weise erhaltene "behandelte Kleie" erlaubt es, die Haltbarkeit zu verlängern sowie Mundgefühl, Geschmack und Geruch der Speisekleien zu verbessern.

Bei der Feinzerkleinerung, der wohl einfachsten Form Rohkleie mechanisch für den erfindungsgemäßen Einsatz zu modifizieren (und damit _{"}behandelte Kleie" zu erhalten"), wird die Rohkleie entweder zuerst stabilisiert oder direkt ab der Mühle unter Schutzgasbedingungen mit einer Sichtermühle (z.B. eine Netzsch-Condux CSM) fein vermahlen. Diese Sichtermühle vereint ein Prallmahlwerk mit einem integrierten dynamischen Windsichter (Schaufelrad), die Endfeinheiten < als 10 µm möglich machen. Bei diesem Prozeß können Produkttemperaturen von typischerweise 50 bis 70°C erreicht werden.

Eine thermische Modifizierung von Rohkleie durch z.B. thermopneumatische Behandlung kann z.B. durch eine, in der Müllerei bekannte, thermopneumatische Anlage durchgeführt werden. Diese Anlagen setzen sich aus Ventilatoren, Warmetauscher und einem Rohrsystem zusammen.

Bei der thermopneumatische Behandlung wird die Rohkleie direkt ab der Mühle in einem Rohrsystem mit Heißluft (Temperatur: 100 bis 120°C) während max. 20s gefördert. Das Rohrsystem hat in der Regel einen großen Durchmesser (ca. 30 cm) damit die wenige Kleie schnell genug aufgeheizt wird. Die Kleie erreicht während dieses Prozesses eine Temperatur von typischerweise 70 bis 80°C. Die Anfangsfeuchtigkeit der zu behandelnden Rohkleie (als Anfangsprodukt) von bspw. 14% reduziert sich dadurch auf bspw. ca. 8% für die erfindungsgemäß zur Verfügung gestellte, modifizierte _{"}behandelte Getreide(speise)kleie". Nach dem sogenannten Thermostrang wird die Kleie meistens mit Umgebungsluft von 70-80 °C auf Raumtemperatur abgekühlt.

Bei der mechanisch-thermischen Behandlung wird die Rohkleie direkt ab der Mühle, zum Beispiel mittels eines Zweiwellen-Extruders der Firma Bühler-Uzwil, verarbeitet. In einer vorteilhaften Ausführungsform beträgt die Wellenlänge 1.50 m und der Durchmesser beträgt 93 mm. Im ersten Viertel des Extruders wird ca. 15-16% Wasser zugegeben. Im Extruder wird die Rohkleie thermisch (Extrusionstemperatur ca. 150 °C) und mechanisch (die max. Schneckendrehzahl beträgt 450 Umdrehungen pro Minute) verarbeitet. Da vorzugsweise nur mit etwa 50-60% der max. Umdrehungen gearbeitet wird, kann die mechanische Bearbeitung als eher schonend bezeichnet werden. Am Ende des Extruders ist eine Düsenplatte mit 24 Löchern mit einem Durchmesser von je 6 mm angebracht. Da mit wenig Umdrehungen gearbeitet wird und die Löcher in der Düsenplatte eher groß bemessen sind, baut sich ein verhältnismäßig geringer Druck von max. 5 Bar im Extruder auf. Die Verweilzeit im Extruder bei obigen Parametern beträgt ca. 5 Sek. Die extrudierte Kleie (das Extrudat) verläßt den Extruder strangartig in einer pastösen Konsistenz. Unabhängig von den Extrusionsbedingungen expandieren zum Beispiel Weizenkleie-Extrudate kaum. Durch Schneiden der Extrudatstränge direkt nach der Düsenplatte, entstehen eine Art Kleiepastenwürfel. Diese werden abgesaugt, bei ca. 140°C getrocknet und mittels einer Hammermühle fein vermahlen.

In der WO 02/15711 ist ein weiteres Verfahren zum Modifizieren von Rohkleie, insbesondere Weizenkleie, beschrieben, welches auch im Rahmen der vorliegenden Erfindung zum Einsatz kommen kann und bei dem in der Rohkleie die vorwiegend Aleuron enthaltenden Bestandteile von den nicht Aleuron enthaltenden Bestandteilen (insbesondere also vom Keimling) getrennt werden. Insoweit ist die WO 02/15711 vollinhaltlich Bestandteil der vorliegenden Offenbarung. Die Ablösung kann biochemisch-enzymatisch und/oder mechanisch-abrasiv erfolgen. Bei der üblichen müllereitechnischen Trennung von Mehlkörpem und Schalen verbleibt die Aleuronschicht bei der Schale, zusammen mit Fruchtschale und Samenschale, und wird als Kleiebestandteil, wie bereits oben erwähnt, als Speise- oder Futterkleie weiterverwendet. Wird die Aleuronschicht, wie in der WO02/15711 offenbart, von der Samenhaut getrennt, so verbleibt eine im Vitamin-, Mineralien-, Rohfett- und Rohprotein-Gehalt verminderte Restkleie, während andererseits Fasergehalt und Stärkeanteil erhöht sind. Je nach Aleuron-Ausbeute weist die Restkleie zum Beispiel 20% weniger Protein und bis zu 50% weniger Mineralstoffe auf. Die Partikelgrößen der mechanisch oder mechanisch und thermisch modifizierten Restkleiepartikel liegt vorzugsweise bei 200-800 µm, besonders bevorzugt um die 300 µm. Es ist vorteilhaft, wenn die mechanische Einwirkung auf die Rohkleie in Form von Scherkräften erfolgt. Dies kann zum Beispiel dadurch geschehen, daß die Flüssigkeit in der die Kleie geführt ist, in eine Kolloidmühle eingeleitet wird, von der dann die Scherkräfte aufgebracht werden, oder es kann eine mechanisch-thermische Modifizierung mittels eines Extruders erfolgen. Es hat sich gezeigt, daß auch solche modifizierte Aleuron-reduzierte "behandelte Kleie" vorteilhaft in einer erfindungsgemäßen Zusammensetzung (insbesondere im erfindungsgemäßen Vorteigkonzentrat) Anwendung finden kann.

Derart modifizierte "behandelte Kleie" kommt insbesondere im erfindungsgemäßen Vorteigkonzentrat zum Einsatz. Zu diesem Zweck wird es grundsätzlich erwünscht sein, die mechanische, thermische oder mechanisch-thermische Behandlung der Rohkleie (mit dem Ziel, "behandelte Kleie" zu erhalten) vorzugsweise innerhalb von 24h, stärker bevorzugt innerhalb von 10h, noch stärker bevorzugt innerhalb von 3h und am stärksten bevorzugt innerhalb von 1h nach dem Erhalt der Rohkleie (im Zuge der Mehlherstellung in der Mühle) durchzuführen.

Das erfindungsgemäße Vorteigkonzentrat zur Herstellung ganz oder teilweise hefegetriebener Backwaren besteht aus mechanisch, thermisch, vorzugsweise thermopneumatisch, und/oder mechanisch-thermisch modifizierte Getreidespeiserohkleie (derartige modifizierende Bearbeitung führt zu "behandelter Getreidespeisekleie" als Produkt) aus Weiten- oder Hartweizenkleie, Hefe und Ascorbinsäure.

Typischerweise erfolgt nach dem mechanischen, thermischen oder mechanisch-thermischen Verarbeitungsschritt die Zugabe von Wasser zur erhaltenen "behandelten Kleie". Hierdurch wird erfindungsgemäß "behandelte, mit Wasser versetzte Kleie" erhalten. Die Gew.anteile von "behandelter Kleie" und Wasser können abhängig von der gewünschten Konsistenz der "behandelten, mit Wasser versetzten Kleie" frei gewählt werden. Typischerweise werden die Gew.anteile des Wassers >50 (entsprechend der "behandelten Kleie" <50), stärker bevorzugt >60 (entsprechend der "behandelten Kleie" <40), und noch stärker bevorzugt >65 (entsprechend der "behandelten Kleie" <35) sein. Ggf. kann ein Anteil des Wassers aber auch bereits während der thermischen, mechanischen oder mechanisch-thermischen Behandlung der Rohkleie zugesetzt werden. Insbesondere im Falle der Behandlung durch Extrusion kann es vorteilhaft sein, bereits während der Extrusion Wasser hinzuzufügen.

Derart modifizierte "behandelte, mit Wasser versetzte Kleie" kann nunmehr (i) bspw. mit Hefe (s. entsprechende Offenbarung) versetzt werden oder aber alternativ (ii) ohne definierten Hefezusatz stabil gelagert werden.

Diese gemäß (ii) "behandelte, mit Wasser versetzte Kleie" ohne definierten Hefezusatz ist lagerungsstabil über bspw. bis zu 6 Monaten. Bevorzugte Lagerzeiten belaufen sich auf 5 bis 30 Tage, stärker bevorzugt zwischen 15 und 25 Tagen. Die Lagerung erfolgt unter aeroben Bedingungen also an der Luft, verbunden mit der auf diese Weise einsetzenden Inkorporation von Wildhefen aus der Luft in die lagernde "behandelte, mit Wasser versetzte Kleie". Typischerweise erhält man erfindungsgemäß aus der "behandelten, mit Wasser versetzten Kleie" derart den Grundvorteig. Dieser Grundvorteig kann nach Ablauf der Lagerungszeit wiederum mit extrudierter Kleie, bspw. einem Weizenkleie-Extrudat, vermischt werden. Erfindungsgemäss wird schliesslich das Vorteigkonzentrat erhalten bzw. ist erhältlich.

In einer bevorzugten Ausführungsform der vorliegenden Erfindung ist daher die im erfindungsgemässen Vorteigkonzentrat enthaltene "behandelte Getreidespeisekleie" extrudiert, noch stärker bevorzugt, dass die Rohkleie, aus der durch Modifizierung die _{"}behandelte Getreidespeisekleie" hervorgeht, bei 130 - 180°C, vorzugsweise 150°C, extrudiert ist.

Im bevorzugten Falle des Einsatzes von Weizenrohkleie weisen die Partikel nach Modifizierung, insbesondere Extrusion, Partikelgrössen von unter 315 µm, vorzugsweise mit einer Partikelgrössenverteilung von mindestens 95% < 200 µm, mindestens 73% < 125 µm, mindestens 54% < 90 µm, mindestens 22% < 63 µm auf. Vorteigkonzentrate, die auf darartig bevorzugten "behandelten Weizenkleien" beruhen, sind insbesondere für die Herstellung von dunklen Teigen geeignet. Im ebenfalls bevorzugten Falle des Einsatzes von modifizierter, insbesondere extrudierter Hartweizenrohkleie ("behandelte Hartweizenrohkleie" als Produkt) sind Partikelgrössen von unter 315 µm, vorzugsweise mit einer Partikelgrössenverteilung von mindestens 82% < 200 µm, mindestens 55% < 125 µm, mindestens 39% < 90 µm, mindestens 21% < 63µm bevorzugt. Diese bevorzugte erfindungsgemässe "behandelte Rohweizenkleie" findet sich in solchen erfindungsgemässen Vorteigkonzentraten, die insbesondere für die Herstellung von hellen oder dunklen Teigen geeignet sind. Schliesslich sind auch solche erfindungsgemässen Vorteigkonzentrate bevorzugt, die modifizierte "behandelte Hartweizenkleie" mit Partikelgrössen von unter 315 µm, vorzugsweise mit einer Partikelgrössenverteilung von mindestens 72% < 200 µm, mindestens 45% < 125 µm, mindestens 29% < 90µm, mindestens 11% < 63 µm aufweisen, gleichfalls zur Verwendung bei der Herstellung von hellen oder dunklen Teigen.

Das erfindungsgemäße Vorteigkonzentrat wird vorzugsweise als Paste (also in pastöser Form) oder als Flüssigprodukt angeboten. Typische erfindungsgemäße Vorteigkonzentrate zeichnen sich dadurch aus, daß der Gew.anteil (Anteil) an modifizierter "behandelter Getreidespeisekleie" im Vorteigkonzentrat bei 6 bis 50%, vorzugsweise 20 bis 40%, stärker bevorzugt bei 30 bis 40% für ein pastöses Vorteigkonzentrat und 20 bis 25% für eine Vorteigkonzentrat-Suspension liegt. Stärker bevorzugt sind solche Vorteigkonzentrate, deren Gew.anteil (Anteil) an modifizierter "behandelter Getreidespeisekleie" im Vorteigkonzentrat bei 35% für ein pastöses Vorteigkonzentrat und 23% für eine Vorteigkonzentrat-Suspension liegt.

Die Dosierung des Vorteigkonzentrates beträgt nur ca. 1/6 bis 1/7 der bisher üblichen Vorteig-/Hebelmenge. Diese vorteilhafte niedrige Dosierung wird erreicht durch die anteilsmäßige Erhöhung der für die Fermentation in nachfolgenden Verfahrensschritten zur Backwarenherstellung wichtigen Inhaltsstoffe, die vorteilhafter Weise nicht separat hinzugefügt werden müssen. Ihre Funktionen werden nachfolgend beschrieben:
- Getreideeigene Faserstoffe: diese dienen erstens einem für die Fermentation optimalen Wassergehalt und zweitens einer guten Frischhaltung der Gebäcke.
- Getreideeigene Fettstoffe; diese, über die Fermentation teilweise abgebauten Stoffe sind Vorstufen für die Geruch- und Geschmacksbildung im Gebäck.
- Getreideeigene Stärke- und Zuckerstoffe; diese dienen einem optimalen Fermentationsprozeß des Vorteigkonzentrates sowie im Hauptteig für die Hefenahrung. Beim Gebäck bringen vor allem die Zuckerstoffe eine gute Färbung, Krustenaromabildung und Frischhaltung.
- Getreideeigene Eiweißstoffe; auch diese, über die Fermentation teilweise abgebauten Eiweißstoffe, sind Vorstufen für die Geruch- und Geschmacksbildung im Gebäck.
- Getreideeigene Mineralstoffe; die funktionalen Eigenschaften wirken sich, speziell im Vorteigkonzentrat für dunkle" Brote durch die Verstärkung eines typischen Ruchbrotgeruchs und Brotgeschmacks aus.

Gleichwohl können ggf. weitere Hilfs- oder Zusatzstoffen, ggf. dem Vorteigkonzentrat, hinzugefügt werden, insbesondere sind weitere Antioxidantien zu nennen, die das Vorteigkonzentrat bspw. vor Ranzigkeit oder der Bildung unerwünschter Aromastoffe bewahren können und damit die Lagerhaltung verbessern könnten. Als Beispiele für Antioxidantien (entweder allein oder in Kombination) kommen neben Ascorbinsäure Milch-, Wein-, Citronensäure sowie deren Salze in Betracht. Aber auch entsprechende Essenzen aus Zitrusfrüchten oder bspw. Fruchtkonzentrate können diesbezüglich eingesetzt werden, insbesondere auch ascorbinsäurehaltige Fruchtauszüge. Durch die Beigabe von Antioxidantien zum Vorteigkonzentrat wird ein natürlicher Oxidationsschutz erreicht, der eine mehrtägige Haltbarkeit der fer mentierten, gekühlten Paste gewährleistet. Gleichzeitig aktiviert, stabilisieren und schützen die Antioxidantien auch den Kleber bei der Führung des Hauptteiges. Es ist für den Fachmann offensichtlich, daß im vorliegenden Fall unter dem Begriff nicht nur synthetische Antioxidationsmittel, sondern auch von Natur aus Antioxidantien-enthaltende Ingredienzen, wie zum Beispiel Acerola-Pulver, zu verstehen ist. Alle im weiteren gemachten quantitativen Angaben beziehen sich auf Ascorbinsäure als Reinsubstanz.

Weiterhin sind Teiglockerungsmittel einem erfindungsgemäßen Vorteigkonzentrat hinzugefügt, zumindest Hefe (als biologisches Teiglockerungsmittel), insbesondere für Brote eher obergärige Hefen, insbesondere Bäckerhefen, bspw. Saccharomyces cerevisiae. Dabei kann die Bäckerhefe in Form der Preßhefe (Wassergehalt ca. 70%) oder als Trockenhefe (Wassergehalt 8 - 12 %). Schliesslich können sowohl Wildhefe (insbesondere aus der Luft) als auch Hefeextrakte (bspw. nach Extrakte von Presshefen) zum Einsatz kommen. Das erfindungsgemässe Vorteigkonzentrat kann derartige Gewichtsanteile enthalten, dass vor dem Backprozess keine weiteren Hefen mehr zugesetzt werden müssen. Alternativ kann auch nur ein gewisser Prozentsatz (der finalen Hefemenge in der Backmischung) von Hefen im Vorteigkonzentrat enthalten sein, typischerweise zwischen 20 und 70 %, besonders bevorzugt zwischen 20 und 50 % der Hefeanteile in der finalen Backmischung. In einer bevorzugten Ausführungsform wird die Konzentration der Hefeanteile im erfindungsgemässen Vorteigkonzentrat geringer als 50 Gew.anteile, insbesondere geringer als 40, stärker bevorzugt geringer als 30, noch stärker bevorzugt geringer als 20 und am stärksten bevorzugt zwischen 10 und 20 Gewichtsanteile.

Ggf. könnte, wenn erwünscht, das Vorteigkonzentrat zur Teiglockerung physikalisch behandelt werden.

Als weitere Hilfs- oder Zusatzstoffe, die ein erfindungsgemässes Vorteigkonzentrat enthalten kann, kommen alle lebensmittelrechtlich zulässigen Ergänzungsstoffe (Lebensmittelzusatzstoffe) in Betracht, insbesondere also auch Farbstoffe, Konservierungsmittel, Emulgatoren, Schmelzsalze, Verdickungsmittel, Stabilisatoren, Geschmacksverstärker, Säuerungsmittel, Säureregulatoren, modifizierte Stärken, Süssstoffe, Festigungsmittel, Bindemittel, Kleber, bspw. Weizenkleber, Enzyme, (insbesondere Acetolactat-Decarboxylase-Amylase, Katalase, Pyruvat-Decarboxylase, Chymosin, Glucanase, Gluconotransferase, Glucose-lsomerase, Glucose-Oxidase, Hemicellulase), Füllstoffe und/oder Vitamine. Alternativ oder kumulativ können auch enzymhaltige Rohstoffe, wie z.B. Honig, Malzmehl oder Malzextrakt (auch als backfördernde Zutaten), anstelle der Enzyme oder in Kombination mit einem oder mehreren Enzymen in einem erfindungsgemässen Vorteigkonzentrat enthalten sein bzw. hinzugefügt werden.

Im Ergebnis ist ein erfindungsgemässes Vorteigkonzentrat ein Ersatzprodukt für den aus dem Stand der Technik bekannten Vorteig/Hebel mit je nach Kriterium ähnlichen, gleichen oder besseren funktionellen Eigenschaften, wie ein guter Vorteig aus den jeweiligen Ruch-, Halbweiß- und Weißmehlen. Das erfindungsgemäße Vorteigkonzentrat unterscheidet sich außerdem wegen der vorhandenen Bioaktivität deutlich von den im Markt erhältlichen Backmitteln.

Der Einsatzbereich des Vorteigkonzentrates, der mit einem Hauptteig bei der Herstellung von hefegetriebenen Backwaren kombiniert wird, liegt vorzugsweise bei der Herstellung von hellen und dunklen Broten, Brötchen, Pizza und Feingebäcken. Im Hauptteig können alle Getreidemehle unterschiedlichen Mahlgrads enthalten sein, bspw. Mehle von Weizen oder Saatweizen (Triticum aestivum = T. vulgare), Hartweizen (T. turgidum: durum), Einkorn, Dinkel, Emmer; Gerste; Roggen; Hafer; Reis; Hirse und Mais oder auch Triticale (Kreuzung aus Weizen und Roggen) oder Sorghum. Allerdings kann der Hauptteig auch aus Mischmehlen, insbesondere Weizenmischmehlen, hergestellt sein.

Es wird im folgenden im wesentlichen von drei verschiedenen Vorteigkonzentrat-Typen die Rede sein:
- "dunkel" für alle dunklen Gebäcksorten wie Vollkornbrot, Ruchbrot, dunkle Ciabatta etc.,
- "hell" für alle hellen Gebäcksorten wie Weißbrot, Halbweißbrot, Baguette, Brötchen, Zöpfe, Weggli, Gipfel, Pizza, helle Ciabatta, Kuchenteige mit Fettanteil etc., und
- "Aleuron-reduziert" für alle oben genannten hellen Gebäcksorten,
wobei der helle und der Aleuron-reduzierte Typ auch bei der Herstellung von dunklen Gebäcksorten zum Einsatz kommen können.

Bevorzugt sind demnach auch solche Vorteigkonzentrate nach der vorliegenden Erfindung, wobei deren Bestandteil, nämlich die modifizierte "behandelte Getreidespeisekleie", eine im Aleuronanteil reduzierte oder vom Aleuronanteil im wesentlichen befreite Restkleie ist. Weiterhin bevorzugt sind solche Vorteigkonzent rate, reduziert im Aleuron-Anteil (mindestens um 20%, bevorzugt mindestens um 50 %, vorzugsweise um mindestens 70% und stärker bevorzugt um mindestens 85% des nativen Aleuron-Anteil reduziert) oder vom Aleuron (im wesentlichen) befreit, deren Gew.anteil (Anteil) an modifizierter "behandelter Getreidespeisekleie" bei 4 bis 30%, vorzugsweise bei 10% bis 20%, für ein pastöses Vorteigkonzentrat und bei 5 bis 15% für eine Vorteigkonzentrat-Suspension liegt. Noch stärker bevorzugt sind Vorteigkonzentrate dann, wenn der Gew.anteil (Anteil) an modifizierter "behandelter Getreidespeisekleie" im Vorteigkonzentrat sich auf ca. 15% für ein pastöses Vorteigkonzentrat und auf ca. 10% für eine Vorteigkonzentrat-Suspension beläuft.

Ein erfindungsgemäßes Vorteigkonzentrat kann für alle ganz- oder teilweise hefegetriebenen Gebäcke eingesetzt werden. Bei der Herstellung von stark roggenhaltigen Backprodukten (>66% Roggenmehlanteil) wird, um die Backfähigkeit zu gewährleisten, dem Hauptteig zusätzlich ein Säuerungsmittel zugegeben. Generell können mit Einsatz des neuen Vorteigkonzentrates bei allen hefegetriebenen Gebäcke (bspw. hergestellt auf der Basis von Backmitteln) die bestehenden Grundrezepte beibehalten werden. Zu beachten ist jedoch folgendes:
- Das Backmittel ersetzen durch die gemäß Empfehlung angegebene Menge Vorteigkonzentrat.
- Enthält das Backmittel, nebst den backfördernden Stoffen, weitere rezeptbedingte Zutaten wie Milchpulver, Fettstoffe, Zucker, etc., sind diese in der erforderlichen Menge zusätzlich beizufügen.
- Die Hefemenge um ca. 10 bis 30 % reduzieren, sofern die Prozeßparameter nicht verändert werden.
- Die Teigfestigkeit durch Änderung der Wasserschüttmenge anpassen. Dies ist nur erforderlich bei Ersatz von Backmittel mit quellenden Zutaten wie Guar oder Quellmehle.

Der komplette Ersatz des Backmittels durch das erfindungsgemäße Vorteigkonzentrat ermöglicht es, strengste Richtlinien für biologische und/oder ökologische Lebensmittel einzuhalten. Sollte ein kompletter Backmittelersatz nicht nötig sein, so kann das Vorteigkonzentrat natürlich auch unter Zusatz von geringeren Mengen von Backmitteln eingesetzt werden.

Das erfindungsgemäße Vorteigkonzentrat eignet sich für alle bekannten Teigführungs- und Backsysteme wie die Gärverzögerungs- und Gärunterbrechungsmethode, das PATT-System sowie alle Vorback-, Kühl- und Tiefkohlsysteme.

Ein erfindungsgemäßes Vorteigkonzentrat kann vorteilhafter Weise "pastenförmig" (für Bäckereien mit manueller Verwiegung) oder "flüssig" als Suspension (für Bäckereien mit automatischer Zudosierung) sein. In beiden Darreichungsformen kann - erfindungsgemäß - entweder mindestens eine Hefekomponente bereits integriert sein (als sogenannte all-in-one" Produkte), und zwar mit einer solchen Hefemenge, dass bis zum Backprozeß keine weitere Hefe mehr hinzugefügt wer den muß (vollständiger Hefezusatz), oder einer nur anteiligen Hefemenge (bspw. 1/10 bis 9/10 des finalen Hefezusatzes). In diesem Fall muß dem Vorteigkonzent rat vor dem Backprozeß der noch fehlende Hefeanteil hinzugesetzt werden (anteiliger Hefezusatz).

Der Gefrierpunkt liegt beim pastenförmigen Vorteikonzentrat bei ca. -5° C beim Flüssigprodukt bei ca. -3°C. Das Vorteigkonzentrat soll optimalerweise zwischen 2 - 7°C gelagert werden. Da die Fermentation jedoch in reduziertem Ausmaß weitergeht, sollte das Produkt, vorzugsweise mit Kaltluft umströmt, gelagert werden. Das Vorteigkonzentrat wird dem Endkunden mit einem optimalen Fermentationsgrad, mit einer Temperatur von unter 6° C, in Einweg- oder Mehrweggebinden mit Plastikeinlage oder in einem Container angeliefert. Die Haltbarkeit bei ordnungsgemäßer Lagerung liegt bei bis zu 20 Tagen.

Vorteigkonzentrate, die einerseits "behandelte Kleie" enthalten und andererseits auch Malzmehl, Gluten, Amylase-Enzymkomplex und/oder Wasser enthalten (umfassen) sind bevorzugt. Schließlich entsprechen auch solche Vorteigkonzentrate einer bevorzugten Ausführungsform, die als Hefe Preßhefe (ca. 29% Trockensubstanz (TS)), Hefemilch (20% TS) oder das bei der Preßhefe-Herstellung anfallende Hefefiltrat oder ein Gemisch der Vorgenannten umfassen. Anstelle oder in Kombination mit Hefe kann also im erfindungsgemäßen Vorteigkonzentrat auch Hefefiltrat eingesetzt werden. Schließlich können in Kombination mit Hefe und/oder Hefefiltrat auch gärfähige Enzyme, Enzymkomplexe oder Enzymgemische eingesetzt werden. Bspw. kann (können) eine oder mehr, ggf. verschiedene Decarboxylase(n) allein oder in Kombination eingesetzt werden. Diese können CO₂ freisetzen. Grundsätzlich können alle den CO₂-freisetzenden Enzyme erfindungsgemäß im Vorteigkonzentrat Anwendung finden.

### Bevorzugte Ausführungsformen erfindungsgemäßer Vorteigkonzentrate sind im folgenden angegeben:

### a) Pastenförmiges "dunkles" Vorteigkonzentrat für dunkle Teige

| "dunkle" Paste | bevorzugt | minimal | maximal |
|---|---|---|---|
| | % | % | % |
| Weizenkteieextrudat | 30-40, stärker 35 | 10 | 50 |
| Diastase-Malzmehl | 5-15, stärker 9.0 | 0 | 20 |
| Weizenkleber | 2-5, stärker 4.0 | 0 | 10 |
| Ascorbinsäure | 0,2-0,5, stärker 0.4 | 0.1 | 1.0 |
| Enzyme | 0-0,2, stärker 0.1 | 0 | 0.4 |
| Hefemilch | 5-20, stärker 10 | 1 | 50 |
| Hefefittrat/Wasser | Rest | 0 | 60 |
| Total | 100 | | |

### b) Pastenförmiges "helles" Vorteigkonzentrat für helle und dunkle Teige

| "helle" Paste | bevorzugt | minimal | maximal |
|---|---|---|---|
| | % | % | % |
| Hartweizenkleieextrudat | 30-40, stärker 35.0 | 10 | 50 |
| Diastase-Malzmehl | 5-15, stärker 9.0 | 0 | 20 |
| Weizenkleber | 2-5, stärker 4.0 | 0 | 10 |
| Ascorbinsäure | 0,2-0,5, stärker0.4 | 0.1 | 1.0 |
| Enzyme | 0-0,2, stärker 0.1 | 0 | 0.4 |
| Hefemilch | 5-20, stärker 10 | 1 | 50 |
| HefefiltratNVasser | Rest | 0 | 60 |
| Total | 100 | | |

### c) Pastenförmiges "Aleuron-reduziertes" Vorteigkonzentrat für helle und dunkle Teige

| "Aleuron-reduzierte" Paste | bevorzugt | minimal | maximal |
|---|---|---|---|
| | % | % | % |
| Aleuron-reduzierte Weizenkleie | 10-20, stärker 15 | 4 | 30 |
| Diastase-Malzmehl | 20-30, stärker 25.5 | 0 | 40 |
| Weizenkleber | 6-9, stärker 7.6 | 0 | 10 |
| Ascorbinsäure | 0,2-0,5, stärker 0.3 | 0.1 | 1.0 |
| Enzyme | 0-0,2, stärker 0.1 | 0 | 0.4 |
| Hefemilch | 5-20, stärker 10 | 1 | 50 |
| Hefefiltrat/Wasser | Rest | 0 | 60 |
| Total | 100 | | |

### d) "dunkle" Vorteigkonzentrat-Suspension für dunkle Teige

| "dunkle" Suspension | bevorzugt | minimal | Maximal |
|---|---|---|---|
| | % | % | % |
| Weizenkleieextrudat | 20-30, stärker 23.0 | 6 | 33 |
| Diastase-Malzmehl | 5-10, stärker 6.0 | 0 | 15 |
| Weizenkleber | 2-5, stärker 2.7 | 0 | 6 |
| Ascorbinsäure | 0,1-0,5, stärker 0.3 | 0.1 | 1.0 |
| Enzyme | 0-0,1, stärker 0.07 | 0 | 0.3 |
| Hefemilch | 5-20, stärker 7 | 1 | 50 |
| Hefefiltrat/Wasser | Rest | 0 | 70 |
| Total | 100 | | |

### e) "helle" Vorteigkonzentrat-Suspension für helle und dunkle Teige

| "helle" Suspension | bevorzugt | minimal | Maximal |
|---|---|---|---|
| | % | % | % |
| Hartweizenkleie-extrudat | 20-30, stärker 23.0 | 6 | 33 |
| Diastase-Malzmehl | 5-10, stärker 6.0 | 0 | 15 |
| Weizenkleber | 2-5, stärker 2.7 | 0 | 6 |
| Ascorbinsäure | 0,2-0,5, stärker 0.3 | 0.1 | 1.0 |
| Enzyme | 0-0,2, stärker 0.07 | 0 | 0.3 |
| Hefemilch | 5-20, stärker 7 | 1 | 50 |
| Hefefiltrat/Wasser | Rest | 0 | 70 |
| Total | 100 | | |

### f) "Aleuron-reduziertes" Vorteigkonzentrat-Suspension für helle und dunkle Teige

| "Aleuron-reduzierte" Suspension | bevorzugt | minimal | maximal |
|---|---|---|---|
| | % | % | % |
| Aleuron-reduzierte Weizenkleie | 5-15, stärker 10 | 4 | 30 |
| Diastase-Malzmehl | 5-20, stärker 16.5 | 0 | 30 |
| Weizenkleber | 4-7, stärker 5 | 0 | 7 |
| Ascorbinsäure | 0,2-0,5, stärker 0.3 | 0.1 | 1.0 |
| Enzyme | 0-0,2, stärker 0.1 | 0 | 0.3 |
| Hefemilch | 5-20, stärker 7 | 1 | 50 |
| Hefefiltrat/Wasser | Rest | 0 | 70 |
| Total | 100 | | |

Für die Beispiele weist die Hefe vorzugsweise einen TS-Gehalt von 12-28%, stärker bevorzugt 15-22%, besonders bevorzugt von 20% auf. In allen vorgenannten bevorzugten Ausführungsformen kann auf die Enzym-Komponente und die Weizenkleber-Komponente verzichtet werden. Die diesbezüglich entfallenden Gew.anteile werden durch eine entsprechende Erhöhung des HefefiltratNVasseranteils ausgeglichen. Als Enzyme können in den vorgenannten und nachfolgenden Beispielen auch enzymhaltige Naturstoffe, wie z.B. Honig, (in identischen minimalen/maximalen, bevorzugten und stärker bevorzugten Gew.%) eingesetzt werden.

### g) Weitere Beispiele für "dunkle" Vorteigkonzentrate

### - Beispiel g1

40 Anteile extrudierte Weizenkleie (160°C; Partikelgröße unter 315µm)
10 Anteile Malzmehl
< 1 Anteile Ascorbinsäure
< 1 Anteile Amylase Enzymkomplex
2.5 Anteile Hefe
50 Anteile Wasser

Die gemäß Beispiel g1 eingesetzten Komponenten bilden ein fest-pastöses Vorteigkonzentrat.

### - Beispiel g2

40 Anteile extrudierte Weizenkleie (160°C; Partikelgröße unter 315 µm)
10 Anteile Malzmehl
< 1 Anteile Ascorbinsäure
< 1 Anteile Amylase Enzymkomplex
2.5 Anteile Hefe
100 Anteile Wasser

Die gemäß Beispiel g2 eingesetzten Komponenten bilden ein dickflüssiges Vorteigkonzentrat.

### Beispiel g3

40 Anteile extrudierte Weizenkleie (160°C; Partikelgröße unter 315µm)
10 Anteile Malzmehl
< 1 Anteile Ascorbinsäure
< 1 Anteile Amylase Enzymkomplex
30 Anteile Hefe
70 Anteile Wasser

Die gemäß Beispiel g3 eingesetzten Komponenten bilden ein weichpastöses Vorteigkonzentrat.

### Beispiel g4

40 Anteile extrudierte Weizenkleie (160°C; Partikelgrö ße unter 315µm)
10 Anteile Malzmehl
< 1 Anteile Ascorbinsäure
< 1 Anteile Amylase Enzymkomplex
1 Anteile Hefe
70 Anteile Wasser

Die gemäß Beispiel g4 eingesetzten Komponenten bilden ein pastöses Vorteigkonzentrat.

Ein weiterer Gegenstand der vorliegenden Erfindung sind Verfahren zur Herstellung eines erfindungsgemäßenyVorteigkonzentrats, wobei Weizenrohkleie, mechanisch, thermisch oder mechanisch-thermisch behandelt wird, Hefe und Ascorbinsäure, mit der erhaltenen "behandelten Getreidespeisekleie vermengt werden, wobei die Konsistenz von einer fließfähigen Suspension bis zu einer festen Paste, reichen kann. Danach wird bis zu 72 Stunden bei abnehmender Temperatur fermentiert. Weiter bevorzugt ist es, durch Absenken der Temperatur die Fermentation zum gewünschten Zeitpunkt zu beenden. Typischerweise wird daher die Fermentation durch Abkühlen auf 2 bis 6°C im wesentlichen gehemmt und damit vorzugsweise beendet.

Ein besonders bevorzugtes Verfahren zeichnet sich dadurch aus, daß nach dem Vermengen in dem nachfolgenden Verfahrensschritt eine Erwärmung des Vorteigkonzentrates auf 26 bis 32°C, maximal auf 36°C, zugelassen wird und dann innerhalb von 72 Stunden auf eine Pastentemperatur von etwa 2 bis 5°C herabgekühlt wird.

Vorteigkonzentrate, die durch erfindungsgemäße Verfahren erhalten werden bzw. erhältlich sind, sind gleichfalls Gegenstand der vorliegenden Erfindung. Hinsichtlich der jeweiligen verfahrensspezifischen Ausführungsmöglichkeiten wird auf die entsprechende Offenbarung zu den erfindungsgemäßen Vorteigkonzentraten verwiesen.

Ebenso sind Verfahren zur Herstellung ganz oder teilweise hefegetriebener Backwaren, insbesondere von Brot oder Pizza, Gegenstand der vorliegenden Patentanmeldung. Hierbei wird zunächst (a) ein erfindungsgemäßes Vorteigkonzentrat nach einem erfindungsgemäßen Verfahren hergestellt, danach (b) das gemäß (a) erhaltene Vorteigkonzentrat mit Getreideprodukten und Wasser zu einem Endteig vermengt, (c) mit einem Teigführungssystem, vorzugsweise in direkter Teigführung, weiterverarbeitet und schließlich (d) einem Backprozeß unterworfen. Der Backprozeß kann in Backöfen durchgeführt werden. Backtemperatur und Backdauer hängen von der Art und Größe der Backware ab. Bspw. wird für erfindungsgemäßes Weizenbrot mindestens 40 min bei Temperaturen von über 200°C bevorzugt sein. Grundsätzlich wird die Backtemperatur zur Herstellung erfindungsgemäßer Backwaren oberhalb von 100°C liegen und die Backdauer mindestens 5 min betragen.

In einer bevorzugten Ausführungsform wird dieses Verfahren derart ausgestaltet sein, daß der Anteil des Vorteigkonzentrats an der gesamten Teigmenge des Endteigs zwischen 1 und 6 Gew.anteilen, vorzugsweise zwischen 2 und 3 Gew.anteilen, liegt.

Die vorliegende Erfindung wird durch die nachfolgenden Ausführungsbeispiele näher erläutert.

### Ausführungsbeispiele

### Herstellung von bevorzugten Ausführungsformen des Vorteigkonzentrats:

### (A)

Das erfindungsgemäße Vorteigkonzentrat ist ein natürliches Brotverbesserungsmittel, das mit einem Hauptteig vermengt und schließlich einem Backvorgang unterzogen wurde. Das erfindungsgemäße Vorteigkonzentrat umfaßt die bereits oben erwähnte mechanisch, thermisch oder mechanisch-thermisch modifizierte "behandelte und mit Wasser versetzte Kleie" als Basis und Hefe und Ascorbinsäure. Im Falle einer optionalen Zugabe von gemälztem Getreide, vorzugsweise in Form von Malzmehl, Weizenkleber, Enzyme und/oder Wasser, wurde ein erfindungsgemäßes Vorteigkonzentrat dadurch zur Verfügung gestellt, daß es mit den gemälzten Getreidekomponenten zu einer erfindungsgemäßen Paste gemischt wurde. Nach dem Mischprozeß wies die erfindungsgemäße Paste eine durchschnittliche Temperatur zwischen 16 und 20 °C auf, welche durch die Stoffwechselaktivität der ggf. hinzugefügten Hefe rasch ansteigt. Falls Hefe hinzugefügt worden war bzw. in der erfindungsgemäßen Paste enthalten war, wurde durch rasche Kühlung verhindert, daß die Temperatur der Mischung über ca. 32 °C anstieg. Bei gleichbleibender Kühlung erreichte die Paste nach 24 - 72 Stunden eine Temperatur von -2 bis 4 oder 5 °C.

### Kühlbeispiele:

| | **Beispiel 1** | **Beispiel 2** |
|---|---|---|
| Start | 16-20 °C | 16-20 °C |
| 3 Stunden | 27-30 °C | 29-32 °C |
| 6 Stunden | 24-26 °C | 26-28 °C |
| 9 Stunden | 19-21 °C | 24-26 °C |
| 12 Stunden | 16-18 °C | 21-23 °C |
| 18 Stunden | 11-13 °C | 16-18 °C |
| 24 Stunden | 8-10 °C | 11-13 °C |
| 30 Stunden | 6-8 °C | 8-10 °C |
| 36 Stunden | 5-7 °C | 6-8 °C |
| 42 Stunden | 4-6 °C | 4-7 °C |
| 48 Stunden | 2-4 °C | 2-5 °C |

Je nach zugeführter Wassermenge kann das erfindungsgemäße Vorteigkonzentrat als eine Paste oder ein fließfähiges Produkt (Suspension) bereitgestellt werden. Zur Herstellung des Vorteigkonzentrats als Suspension wurde nach dem Kühlprozeß unter leichtem Rühren Eiswasser zugeführt, bis die gewünschte Viskosität erreicht war. Die nun pumpfähige Lösung wurde dann wie bereits beschrieben verpackt und gelagert.

Das Vorteigkonzentrat konnte unter Einsatz von normaler Preßhefe, Hefemilch, dem bei der Preßhefe anfallenden Filtrat oder einem Gemisch davon, fermentiert werden. Auf die Verwendung von künstlichen Säuren wie z.B. Essig-, Milchsäure oder Starterkulturen kann ggf. verzichtet werden.

### (B)

(1) Vorzugsweise umfaßt das erfindungsgemäße dunkle" Vorteigkonzentrat für dunkle Teige:
   - mechanisch und/oder thermisch behandelte Getreidespeiserohkleie, insbesondere extrudierte (140-180°C, vorzugsweise 160°C; Feuchtigkeit 6 bis 8, vorzugsweise ca. 7 Maß-%; Asche(TS) 5 bis 8, vorzugsweise ca. 6 Maß-%; Partikelgröße/Kömung: Partikelgröße vorzugsweise unter 400 µm, stärker bevorzugt unter 350 µm und noch stärker bevorzugt unter 315 µm (über 99%), vorzugsweise 95% < 200 µm, 73% < 125 µm, 54% < 90 µm, 22% < 63 µm) Rohkleie, also vorzugsweise bspw. "behandelte Weizenkleie" oder Mischungen von extrudierter "behandelter Weizenkleie" und extrudierter "behandelter Hartweizenkleie" (140-180°C, vorzugsweise 160°C; Partikelgröße unter 315 µm, vorzugsweise 82% < 200 µm, 55% < 125 µm, 39% < 90 µm, 21%< 63 µm).
   - Gemälzte Getreideprodukte oder Komponenten gemälzter Getreideprodukte, vorzugsweise Malzmehl
   - Mindestens eine Antioxidans-Komponente: Ascorbinsäure
   - Ggf. Weizenkleber
   - Hefe; wobei die Hefe Preßhefe (ca. 28% Trockensubstanz TS) und/oder Hefemilch (20% TS) umfaßt, und vorzugsweise auch das bei der Preßhefe-Herstellung anfallende Filtrat
   - Enzyme; vorzugsweise Pilz-alpha-Amylase mit Nebenaktivitäten
   - Wasser
(2) Vorzugsweise umfaßt das erfindungsgemäße "helle" Vorteigkonzentrat für helle oder dunkle Teige:
   - mechanisch und/oder thermisch behandelte Getreidespeiserohkleie", insbesondere extrudierte behandelte Hartweizenkleie" (Feuchtigkeit >5 Maß-%; Asche(TS) von 4 bis 8, vorzugsweise ca. 5 Maß-%; Partikelgröße/Kömung: Partikelgröße vorzugsweise unter 400 µm, stärker bevorzugt unter 350 µm und noch stärker bevorzugt unter 315 µm (Ober 99%), vorzugsweise 82% < 200 µm, 55% < 125 µm, 39% < 90 µm, 21% > 63 µm)
   - Gemälzte Getreideprodukte oder ein oder mehr Komponenten gemälzter Getreideprodukte, vorzugsweise Malzmehl
   - Mindestens eine Antioxidans-Komponente: Ascorbinsäure
   - Ggf. Weizenkleber
   - Hefe; wobei die Hefe Preßhefe (ca. 28% Trockensubstanz TS) und/oder Hefemilch (20% TS) umfaßt, und vorzugsweise auch das bei der Preßhefe-Herstellung anfallende Filtrat
   - Enzyme; vorzugsweise Pilz-alpha-Amylase mit Nebenaktivitäten
   - Wasser
(3) Vorzugsweise umfaßt das erfindungsgemäße "Aleuron-reduzierte" Vorteigkonzentrat für helle oder dunkle Teige:
   - Aleuron-reduzierte Getreidespeisekleie, vorzugsweise Weizenkleie (Körnung/Partikelgröße unter vorzugsweise unter 400 µm, stärker bevorzugt unter 350 µm und noch stärker bevorzugt unter 315 µm (über 99%), vorzugsweise zwischen 60 bis 125 µm, besonders bevorzugt 75µm)
   - Gemälzte Getreideprodukte oder ein oder mehr Komponenten gemälzter Getreideprodukte, vorzugsweise Malzmehl
   - Mindestens eine Antioxidans-Komponente: Ascorbinsäure
   - Ggf. Weizenkleber
   - Hefe; wobei die Hefe Preßhefe (ca. 28% Trockensubstanz TS) und/oder Hefemilch (20% TS) umfaßt, und vorzugsweise auch das bei der Preßhefe-Herstellung anfallende Filtrat
   - Enzyme; vorzugsweise Pilz-alpha-Amylase mit Nebenaktivitäten
   - Wasser

Zur Herstellung der vorgenannten bevorzugten Ausführungsformen der erfindungsgemäßen Vorteigkonzentrate wurden typischerweise die Trockenstoffe zusammengewogen und gemischt. Anschließend wurden die Flüssigkeiten mit einer Ausgangstemperatur von ca. +3°C. beigegeben und mit den Trockenstoffen zu einer Paste vermischt. Die frisch produzierte Paste mit einer Ausgangstemperatur von ca. 16°C bis 20°C begann sich sofort zu fermentieren und die Temperatur erhöhte sich durch die Fermentationswärme rasch auf 26 bis 32° C. Um eine Übererwärmung (insbesondere über 36°C), die zur Essigsäureentwicklung führen kann, zu vermeiden, mußte die Kühlung möglichst schnell eingesetzt werden. Beim Batchverfahren sollte während des Fermentationsprozesses Rühren oder Bearbeiten der Paste möglichst unterlassen werden, um keinen zusätzlichen Sauerstoff einzubringen und dadurch möglichst anaerobe Bedingungen in der Paste zu gewährleisten. Im anaeroben Milieu werden von den Hefen gewünschte Vorstufen zu Aromastoffen gebildet. Beim kontinuierlichen Verfahren soll die Bearbeitung möglichst schonend erfolgen.

Wurde die Paste anschliessend in von der Hefeherstellung bekannte Kunststoff-Gittergebinde (Masse 40 x 60 cm) portioniert, und in einem mit Kaltluft von ca. 0°C stark umströmten Ort gekühlt, wurde in ca. 24 bis 72 Std. eine Pastenternperatur von ca. 2 - 5°C erreicht. Diese Temperatur genügte, um den Fermentationsprozess auf ein Minimum zu reduzieren. Es kann diesbezüglich auf die weiter oben gezeigten Beispiele, welche den Kühlprozess illustrieren, verwiesen werden.

Gemäss eines weiteren alternativen Beispieles (4) wurde ein Vorteigkonzentrat auf der Basis extrudierter Weizenkleie als "behandelte Kleie" und Wasser, ohne definierten Zusatz von Hefe hergestellt (s. Alternative (ii) auf S. 9 der vorliegenden Offenbarung). Hierzu wurde zunächst (Verfahrensschritt (1)) in Analogie zur Herstellung eines Madre-Grundteigs (Hefe-Ersatzteigherstellung) verfahren, (Verfahrensschritt (2)) in Analogie zum Madre-Grundteig das Produkt aus (1) weiterverarbeitet und schliesslich (Verfahrensschritt (3)) das erfindungsgemässe Vorteigkonzentrat auf Basis extrudierter "behandelter Kleie", Madre-Grundteig und Wasser hergestellt.

### Verfahrensschritt (1)

### Herstellung eines Grundvorteiges

Es wurden die folgenden in Analogie zur Herstellung eines Madre-Grundteiges üblichen Konditionen in einem 10-Stufen-Prozess gewählt:

In einer Herstellung über 10 Stufen (Wiederholung an 10 aufeinander folgenden Tagen unter Verwendung einer Grundmenge des Teigs vom Vortag) wurde (i) das Kleie-Extrudat und Wasser zu einem Teig angerührt und ca. 6 Stunden bei ca. 32°C fermentiert, anschliessend (ii) wurde der gemäss (i) erhaltene Teig sofort auf +2 bis +6°C gekühlt und dann ca. 18 Std. gekühlt gelagert
(vorteilhafter Weise über Nacht). Schließlich wurde der Teig (iii) täglich nach folgender Vorgabe zur nächsten Stufe aufgefrischt. Im Falle einer Führung über das Wochenende und Feiertage wurde der Teig bei -2 bis max. +2 ° C gelagert.

| Rezept mit Kleie-Extrudat | | | | |
|---|---|---|---|---|
| | Teig (Vortag) | Kleie | Wasser | Total-Teig |
| 1. Stufe | | 100 | 200 | 300 |
| 2. Stufe | 150 | 50 | 100 | 300 |
| 3. Stufe | 150 | 50 | 100 | 300 |
| 4. Stufe | 150 | 50 | 100 | 300 |
| 5. Stufe | 150 | 50 | 100 | 300 |
| 6. Stufe | 150 | 50 | 100 | 300 |
| 7. Stufe | 150 | 50 | 100 | 300 |
| 8. Stufe | 150 | 50 | 100 | 300 |
| 9. Stufe | 150 | 50 | 100 | 300 |
| 10.Stufe | 150 | 50 | 100 | 300 |

### Verfahrensschritt (2)

### Vermehrung des Grundvorteiges:

Der Grundvorteig wurde über eine ca. 6-stündige Fermentation bei ca. 32° C vermehrt. Dies erfolgte, indem 2/3 (Kleie + Wasser) + 1/3 Grundvorteig (vom Vortag) zu einem Teig vermengt und ca. 6 Stunden bei ca. 32°C fermentiert wurden. Für die Folgetage erfolgten die Prozesse auf gleiche Art.

### Verfahrensschritt (3)

### Herstellung des Vorteigkonzentrates

Schließlich erfolgte eine Zusammenführung bzw. Vermengung des gemäß (2) erhaltenen vermehrten Grundvorteigs mit behandelter Kleie" und Wasser. Im Einzelfall können die Mengenverhältnisse bei der Kombination dieser drei Komponenten variieren, typischerweise abhängig von der gewünschten Teigviskosität. Typischerweise werden ca. 28 bis 35 Gew.anteile Grundvorteig, 27 bis 34 Gew.anteile "behandelte Kleie" und 33 bis 40 Gew.anteile Wasser kombiniert werden. Eine bevorzugte Rezeptur für das Vorteigkonzentrates weist ca. 33% Gew.anteile Grundvorteig, ca. 30 Gew.anteile "behandelte Kleie" und ca. 37% Wasser auf.

Die Vorteigkonzentrate (erhalten bzw. erhältlich aus dem vorgenannten Verfahren gemäß Beispiel (4)), fermentiert mit separat hergestelltem Grundvorteig ("Madre"), unterscheiden sich sowohl optisch als in der Anwendung (Teigbeschaffenheit, Volumen, Sensorik, Frischhaltung usw.) nicht von Vorteigkonzentraten unter Zugabe definierter Mengen traditioneller Hefe (s. Beispiele 1-3). Im übrigen können grundsätzlich alle in der vorliegenden Offenbarung genannten Hilfs-, Ergänzungs- und Zusatzstoffe auch Vorteigkonzentraten, bzw. hergestellt gemäß Beispiel 4, hinzugefügt werden. Diese weiteren Zutaten, wie z.B. Malzmehl, Antioxidantien, Kleber etc. üben bei beiden Vorteigkonzentraten die gleiche Funktion aus. Sie dienen insbesondere zur Absicherung von schwankenden Mehlqualitäten, unterschiedlichen Produktionsprozessen und unterschiedlichen Rezepturen.

Im Ergebnis kann daher festgehalten werden, daß mit dem erfindungsgemäßen Vorteigkonzentrat, das nur aus modifizierter, bspw. extrudierter "behandelter Kleie" und Wasser besteht, unter Verwendung des vorbezeichneten Fermentationsprozesses (in der Art der "Madre-Herstellung") Gebäcke hoher Qualität hergestellt wurden. Diese Gebäcke besitzen einen guten Geruch und Geschmack, gute Verzehrseigenschaften und eine lange Frischhaltung. Je nach Rezepturbedingungen, Mehlqualität, Anforderungen an die Produktionssicherheit oder bei Verwendung anderer Teigführungssysteme, wie GU (Gärunterbrechung durch Einfrosten der Teiglinge), GV (Gärverzögerung durch Abkühlen der Teiglinge), PATT (programmierte Abkühlung teilgegarter Teiglinge, nach Kolb-Kältetechnik AG, CH), etc., können weitere Zutaten, wie bspw. Weizenkleber, Malzmehle, Enzyme und (anti)oxidative Stoffe, die Produktqualität weiter erhöhen.

### Herstellung von Backwaren auf der Basis erfindungsgemäßer Vorteigkonzentrate

Erfindungsgemäß wurde gezeigt, daß Backwaren, die unter Verwendung des findungsgemäßen Vorteigkonzentrates hergestellt wurden, hervorragende Eigenschaften in bezug Teigentwicklung, Teigstabilität und Volumen haben.

Es wurden mit Halbweißmehl (Mehl Typ 700) und Vorteigkonzentrat hell breit angelegte Triebproben und Backversuche durchgeführt. Die Ergebnisse dieser Ver suche sind im folgenden zusammengefaßt

| | **Triebprobe** | | | | **Backversuch** | |
|---|---|---|---|---|---|---|
| **PRODUKT*** | **max. Teigentwicklung** | | **Total CO2 Production** | **Gashaltevermögen** | **Ideale Stuckgare Volumen** | **aus 100 g Mehl** |
| | Min. | ml | ml | Min. | Min. | ml |
| 0 - Versuch | 105 | 300 | 569 | 105 | 45 | 531 |
| 2% Vorteigkonz. Hell | 90 | 270 | 619 | 90 | 45 | 510 |
| 4% Vorteigkonz. Hell | 92 | 270 | 596 | 90 | 45 | 498 |
| 6% Vorteigkonz. Hell | 135 | 270 | 629 | 75 | 45 | 498 |
| 8% Vorteigkonz. Hell | 120 | 280 | 612 | 75 | 45 | 464 |

| | | | | | | |
|---|---|---|---|---|---|---|
| *** Dosierung Vorteigkonzentrat auf die Gesamtmehlmenge** | | | | | | |

| | **0- Versuch** | | **4% Vorteigkonz. Hell*** | | **8% Vorteigkonz. Hell*** | |
|---|---|---|---|---|---|---|
| **Zeit (Min.)** | **Teig- entwicklung** | **CO2 - Produktion** | **Teig-entwicklung** | **CO2-Produktion** | **Teig-entwicklung** | **CO2-Produktion** |
| | ml | ml | ml | ml | ml | ml |
| 0 | 0 | 0 | 0 | 0 | 0 | 0 |
| 15 | 20 | 14 | 40 | 25 | 40 | 21 |
| 30 | 60 | 50 | 90 | 63 | 100 | 75 |
| 45 | 120 | 97 | 140 | 102 | 160 | 123 |
| 60 | 160 | 135 | 190 | 160 | 200 | 164 |
| 75 | 200 | 173 | 240 | 205 | 240 | 222 |
| 90 | 250 | 231 | 270 | 250 | 240 | 269 |
| 105 | 300 | 283 | 240 | 313 | 260 | 314 |
| 120 | 280 | 328 | 280 | 362 | 280 | 388 |
| 135 | 230 | 391 | 280 | 408 | 270 | 450 |
| 150 | 260 | 443 | 300 | 487 | 290 | 492 |
| 165 | 300 | 492 | 320 | 551 | 290 | 554 |
| 180 | 260 | 569 | 300 | 596 | 310 | 612 |

| | | | | | | |
|---|---|---|---|---|---|---|
| * Dosierung Vorteigkonzentrat auf die Gesamtmehlmenge | | | | | | |

Die Resultate bestätigen, daß Teige, hergestellt mit dem erfindungsgemäßen Vorteigkonzentrat, nicht nur eine schnelle Teigentwicklung aufweisen, sondern signifikant länger stabil bleiben.

### Bevorzugte Extrudate

(1) Wie bereits oben erwähnt, weist ein vorzugsweise für die "dunklen" Vorteigkonzentrate verwendetes Weizenkleie-Extrudat gemäß einer Siebanalyse (Feuchtigkeit 7.3 Mass.-%; Asche (TS) 5.95 Mass.-%) folgende Partikelgrößenverteilung auf:

| | |
|---|---|
| Abstoß 315 µm | 0.7 Maß.-% |
| Abstoß 200 µm | 4.8 Mass.-% |
| Abstoß 125 µm | 27.1 Mass.-% |
| Abstoß 90 µm | 46.1 Mass.-% |
| Abstoß 63 µm | 78.4 Mass.-%. |

(2) Für die Vorteigkonzentrate zum Einsatz in "hellen" Teigen wird vorteilhafter Weise Hartweizenkleie-Extrudat oder Aleuron-reduzierte Weizenkleie eingesetzt. Eine vorzugsweise verwendete Aleuron-reduzierte Weizenkleie weist gemäß einer Siebanalyse folgende Partikelgrössenverteilung auf:

| | |
|---|---|
| Abstoß 315 µm | 0.9 Mass.-% |
| Abstoß 200 µm | 2.6 Mass.-% |
| Abstoß 125 µm | 12.7 Mass.-% |
| Abstoß 90 µm | 47.3 Mass.-% |
| Abstoß 63 µm | 81.6 Mass.-%. |

(3) Ein Hartweizenkleie-Extrudat weist gemäss einer Siebanalyse (Feuchtigkeit 4.5 Mass.-%; Asche (900°C, TS) 5.10 Mass.-%) folgende Partikelgrössenverteilung auf:

| | |
|---|---|
| Abstoß 315 µm | 0.6 Mass.-% |
| Abstoß 200 µm | 17.9 Mass.-% |
| Abstoß 125 µm | 45.1 Mass.-% |
| Abstoß 90 µm | 60.7 Mass.-% |
| Abstoß 63 µm | 78.9 Mass.-%. |

### Verarbeitung erfindungsgemäßer Vorteigkonzentrate zu Backwaren

Das erfindungsgemäße Vorteigkonzentrat hat bei der Verarbeitung in Backwarenbetrieben signifikante Vorteile, da es anstelle eines konventionellen Vorteiges dem Hauptteig direkt bei der Zubereitung beigefügt werden kann. Bei den Versuchen wurde festgestellt, daß die notwendige Hefemenge unter derjenigen liegt, die bei einer konventionellen, direkten Teigführung mit Backmitteln notwendig wäre. Zudem waren die Teige deutlich schneller verarbeitbar als bei Backmittel- und Vorteigverwendung, was zu Zeitersparnis in der Produktion führt. Auch konnte die Wasserschüttmenge erhöht werden, d.h. eine höhere Teigausbeute wird erreicht. Vor allem hier hat das erfindungsgemäße Vorteigkonzentrat große Vorteile gegenüber dem aus dem Stand der Technik bekannten Vorteig, weil bei Vorteig aus dem Stand der Technik bekanntlich eine deutlich geringere Teigausbeute erreicht wird. Die Teigausbeute des erfindungsgemäßen Vorteigkonzentrats ist besser als bei herkömmlichen Backmitteln.

Neben den oben bereits erwähnten gewünschten Eigenschaften zeichnet sich das erfindungsgemäße Vorteigkonzentrat durch eine Beschleunigung der Teigentwicklung, eine Optimierung der Verarbeitungseigenschaften der Teige und die Förderung der sensorischen Eigenschaften der Gebäcke aus. Dies kommt vor allem beim besseren und stärkeren Gebäcksgeruch und Geschmack, bei den angenehmeren Verzehrseigenschaften wie einer kürzeren, mürberen Kruste und Krume, sowie eine längere Frischhaltung zur Geltung.

Das erfindungsgemäße Vorteigkonzentrat kann, wie bereits erwähnt, auch als "all-in-one" Produkt angeboten werden, das heißt, es kann in einer Ausführungsform schon die zur Endteigherstellung nötige Menge an Hefe enthalten, so daß in diesem Fall dem Endteig keine Hefe mehr zugegeben werden muß. In der Bäckerei müssen dem all-in-one" Produkt nur noch Mehl, Wasser und Salz zudosiert werden, um den Hauptteig (Endteig) fertig zu stellen und den Backprozeß einzuleiten.

Im folgenden sind einige Richtrezepturen für die Verwendung des erfindungsgemäßen Vorteigkonzentrats bei der Herstellung von verschiedenen typischen Backwaren angeführt. Wie bereits oben erwähnt kann das Konzentrat unter üblichen Anpassungen der Rezeptur für ein sehr breites Spektrum von Backwaren verwendet werden.

| | Ruchbrot | Halbweissbrot | Butterzopf | Pariserbrot | Tessinerbrot | Semmeli |
|---|---|---|---|---|---|---|
| Rohstoffe | in % | in % | in % | in % | in % | in % |
| | | | | | | |
| Weissmehl Typ 400 | x | x | 100.0 | 100.0 | 100.0 | 100.0 |
| Halbweissmehl | x | 100.0 | x | X | x | x |
| Ruchmehl | 100.0 | x | x | X. | x | x |
| Wasser | 70.0 - -72.0 | 67.5 - 69.5 | 49.0- 51.0 | 61.0-63.0 | 55.0 - 57.0 | 57.0-59.0 |
| Kochsalz | 2.2-2.5 | 2.2-2.4 | 1.9-2.2 | 2.1 - 2.3 | 2.0-2.2 | 2.1 - 2.3 |
| Hefe | 1.3-1.6 | 1.3 - 1.6 | 1.9 - 2.2 | 3.2-3.5 | 3.0-3.2 | 3.2-3.4 |
| "helle" Paste | x | 4.0 | 5.0 -6.0 | 5.0-6.0 | 4.0 -5.0 | 5.0-5.0 |
| "dunkle" Paste | 4.0 | x | x | X | x | x |
| Teigmargarine | x | x | x | X | x | 0.8-1.2 |
| Spezialöl | x | x | x | X | 5.0 - 5.2 | x |
| Spezialmilchpulver | x | x | 4.0-5.0 | X | x | x |
| Kochbutter | x | x | 12.0-14.0 | X | x | x |
| Vollei (pasteurisiert) | x | x | 2.3 - 2-6 | X | x | x |
| | | | | | | |

In Abhängigkeit vom Mehltyp kann die Weizen- oder Hartweizenkleie in den oben beschriebenen Vorteigkonzentraten auch ganz oder teilweise durch andere Arten von zu behandelnder Getreidespeiserohkleie, wie zum Beispiel Dinkel-, Emmer-, Einkorn-, Roggen-, Hafer-, Gersten-, Hirse-, Mais- und/oder Reiskleie, ergänzt oder ersetzt werden. Idealerweise wird die modifizierte _{"}behandelte Kleie" im Vorteigkonzentrat so ausgewählt, daß das Endprodukt backtechnisch und geschmacklich optimiert ist.

Da Roggenmehl bekanntlich keinen Kleber hat, muß es durch Säuerung backfähig gemacht werden. Dies kann herkömmlich über eine Mehrstufenführung oder durch Zusatz von Säure oder stark säurehaltigen Backmitteln geschehen. Das neue Vorteigkonzentrat ist kein Säuerungsmittel und daher nur unter Zusatz von bekannten Säuerungsmitteln für Roggenbrote geeignet.

Erfindungsgemäß wurde somit gezeigt, daß Backwaren, die unter Verwendung des erfindungsgemäßen Vorteigkonzentrats, unabhängig von dessen Herstellungsweg, hergestellt wurden, hervorragende Frischhalteeigenschaften aufweisen. So blieben zum Beispiel Brote bis zu 36 Stunden frisch, was für eine zentrale Produktion mit längeren Lieferwegen unschätzbare logistische Vorteile bringt.

## Patentansprüche

1. Vorteigkonzentrat zur Herstellung ganz oder teilweise hefegetriebener Backwaren bestehend aus
➢ mechanisch, thermisch oder mechanisch-thermisch modifizierter Getreidespeisekleie aus Weizen- oder Hartweizenkleie oder Mischungen davon,
➢ Hefe
➢ Ascorbinsäure,
wobei das Gemenge daraus fermentiert ist.

2. Vorteigkonzentrat nach Anspruch 1, **dadurch gekennzeichnet, dass** die modifizierte Getreidespeisekleie vorzugsweise extrudiert ist.

3. Vorteigkonzentrat nach Anspruch 1 oder 2, **dadurch gekennzeichnet, dass** die modifizierte Getreidespeisekleie bei 130 bis 180°C, vorzugsweise 150°C, extrudiert ist.

4. Vorteigkonzentrat nach Anspruch 1 oder 3, **dadurch gekennzeichnet, dass** die modifizierte Weizenkleie Partikelgrössen von unter 315 *µ*m, vorzugsweise mit einer Partikelgrössenverteilung von 95% < 200 *µ*m, 73% < 125 *µ*m, 54% < 90 *µ*m, 22% < 63 µm aufweist, zur Verwendung bei der Herstellung von dunklen Teigen.

5. Vorteigkonzentrat nach Anspruch 1 oder 3, **dadurch gekennzeichnet, dass** die modifizierte Hartweizenkleie Partikelgrössen von unter 315 *µ*m*,* vorzugsweise mit einer Partikeigrössenverteilung von 82% < 200 *µ*m, 55% < 125 *µ*m, 39% < 90 *µ*m, 21% < 63*µ*m aufweist, zur Verwendung bei der Herstellung von hellen oder dunklen Teigen.

6. Vorteigkonzentrat nach einem der vorhergehenden Ansprüche, **dadurch gekennzeichnet, dass** der Anteil an modifizierter Getreidespeisekleie bei 6 bis 50%, vorzugsweise bei 35% für ein pastöses Vorteigkonzentrat und 23% für eine Vorteigkonzentrat-Suspension liegt.

7. Vorteigkonzentrat nach Anspruch 1, **dadurch gekennzeichnet, dass** die modifizierte Getreidespeisekleie eine im Aleuronanteil reduzierte oder vom Aleuronanteil befreite Restkleie ist.

8. Vorteigkonzentrat nach Anspruch 7, **dadurch gekennzeichnet, dass** der Anteil an modifizierter Restkleie bei 4 bis 30%, vorzugsweise bei 15% für ein pastöses Vorteigkonzentrat und 10% für eine Vorteigkonzentrat-Suspension liegt.

9. Vorteigkonzentrat nach einem der vorhergehenden Ansprüche, **dadurch gekennzeichnet, dass** es Malzmehl, Gluten, Amylase-Enzymkomplex und Wasser umfasst.

10. Vorteigkonzentrat nach einem der vorhergehenden Ansprüche, **dadurch gekennzeichnet, dass** die Hefe Presshefe (ca. 29% Trockensubstanz (TS) oder Hefemilch (20% TS) oder das bei der Presshefe-Herstellung anfallende Filtrat oder ein Gemisch der Vorgenannten umfasst.

11. Verfahren zur Herstellung eines Vorteigkonzentrats nach einem der vorhergehenden Ansprüche 1 - 10, **dadurch gekennzeichnet, dass** zumindest mechanisch, thermisch oder mechanisch-thermisch behandelte Weizenkleie, Hefe und Ascorbinsäure vermengt werden, wobei die Konsistenz von einer fliessfähigen Suspension bis zu einer festen Paste reichen kann, wobei nach dem Vermengen bis zu 72 Stunden bei abnehmender Temperatur fermentiert wird.

12. Verfahren nach Anspruch 11, **dadurch gekennzeichnet, dass** die Fermentation durch Abkühlen auf 2 bis 6 °C stark gehemmt wird.

13. Verfahren nach Anspruch 11 oder 12, **dadurch gekennzeichnet, dass** nach dem Vermengen eine Erwärmung des Vorteigkonzentrates auf 26 bis 32°C, maximal auf 36°C, zugelassen wird und innerhalb von 72 Stunden auf eine Pastentemperatur von etwa 2 bis 5°C herabgekühlt wird.

14. Ganz oder teilweise hefegetriebene Backwaren welche mindestens Getreideprodukte und Wasser umfassen, **dadurch gekennzeichnet, dass** sie aus einem Endteig umfassend ein Vorteigkonzentrat nach einem der Ansprüche 1 - 10 gebacken sind.

15. Backwaren, insbesondere Brote und Pizza, nach Anspruch 14, **dadurch gekennzeichnet, dass** sie aus einem Endteig umfassend Salz, Mehl und Wasser und ein Vorteigkonzentrat nach einem der Ansprüche 1 - 10 gebacken sind.

16. Verfahren zur Herstellung ganz oder teilweise hefegetriebenen Backwaren, **dadurch gekennzeichnet, dass** ein Vorteigkonzentrat nach einem der vorhergehenden Ansprüche 1 bis 5 mindestens mit Getreideprodukten und Wasser zu einem Endteig vermengt und in direkter Teigführung verarbeitet wird.

17. Verfahren zur Herstellung von Brot und Pizza nach Anspruch 16, **dadurch gekennzeichnet, dass** ein Vorteigkonzentrat nach einem der Ansprüche 1 - 10 mindestens mit Salz, Getreideprodukten und Wasser zu einem Endteig vermengt und in direkter Teigführung verarbeitet wird.

18. Verfahren nach Anspruch 16, **dadurch gekennzeichnet, dass** der Anteil des Vorteigkonzentrats an der Mehlmenge des gesamten Teiges 2% bis 8% beträgt.

## Claims

1. A predough concentrate for manufacturing entirely or partially yeast-fermented baked goods, consisting of
• mechanically, thermally or mechanically-thermally modified cereal edible bran comprised of wheat or hard wheat bran or mixtures thereof,
• yeast,
• ascorbic acid,
wherein the heterogeneous mixture is fermented from it.

2. The predough concentrate according to claim 1, **characterized in that** the modified cereal edible bran is preferably extruded.

3. The predough concentrate according to claim 1 or 2, **characterized in that** the modified cereal edible bran is extruded at 130 to 180 °C, preferably at 150 °C.

4. The predough concentrate according to claim 1 or 3, **characterized in that** the modified wheat bran has particle sizes measuring under 315 µm, preferably with a particle size distribution of 95 % < 200 µm, 73 % ≤ 125 µm, 54 % < 90 µm, 22 % < 63 µm, for use in the manufacture of dark dough.

5. The predough concentrate according to claim 1 or 3, **characterized in that** the modified hard wheat bran has particle sizes measuring under 315 µm, preferably with a particle size distribution of 82 % < 200 µm, 55 % ≤ 125 µm, 39 % < 90 µm, 21 % < 63 µm, for use in the manufacture of light or dark dough.

6. The predough concentrate according to one of the preceding claims, **characterized in that** the percentage of modified cereal edible bran measures 6 to 50 %, preferably 35 %, for a pasty predough concentrate, and 23 % for a predough concentrate suspension.

7. The predough concentrate according to claim 1, **characterized in that** the modified cereal edible bran is a residual bran in which the aleuron percentage has been reduced or eliminated.

8. The predough concentrate according to claim 7, **characterized in that** the percentage of modified residual bran measures 4 to 30 %, preferably 15 % for a pasty predough concentrate, and 10 % for a predough concentrate suspension.

9. The predough concentrate according to one of the preceding claims, **characterized in that** it encompasses malt flour, gluten, an amylase enzyme complex and water.

10. The predough concentrate according to one of the preceding claims, **characterized in that** the yeast comprises pressed yeast (approx. 29 % dry substance (TS)) or yeast milk (20 %TS), or the filtrate obtained during pressed yeast manufacture, or a mixture of the above.

11. A method for manufacturing a predough concentrate according to one of the preceding claims 1-10, **characterized in that** at least mechanically, thermally or mechanically-thermally treated wheat bran, yeast and ascorbic acid are mixed together, with a consistency ranging from a free-flowing suspension to a solid paste, wherein fermentation takes place after mixing for up to 72 hours at a decreasing temperature.

12. The method according to claim 11, **characterized in that** fermentation is strongly inhibited by cooling to 2 to 6 °C.

13. The method according to claim 11 or 12, **characterized in that**, after mixing, the predough concentrate is allowed to be heated up to 26 to 32 °C, max. 36 °C, and is then cooled to a paste temperature of about 2 to 5 °C.

14. Entirely or partially yeast-fermented baked goods, encompassing at least cereal products and water, **characterized in that** they are baked from a final dough comprising a predough concentrate according to one of claims 1-10.

15. Baked goods, in particular breads and pizza, according to claim 14, **characterized in that** they are baked out of a final dough comprising salt, flour and water, and a predough concentrate according to one of claims 1-10.

16. A method for manufacturing entirely or partially yeast-fermented baked goods, **characterized in that** a predough concentrate according to one of the preceding claims 1 to 5 is mixed with at least cereal products and water to form a final dough, and the dough is processed directly.

17. The method for manufacturing bread and pizza according to claim 16, **characterized in that** a predough concentrate according to one of claims 1-10 is mixed with salt, cereal products and water to form a final dough, and the dough is processed directly.

18. The method according to claim 16, **characterized in that** the percentage of predough concentrate in the flour content of the entire dough measures 2 to 8 %.

## Revendications

1. Concentré de levain-chef pour la fabrication de produits de boulangerie entièrement ou partiellement fermentés au levain, composé de
- son de céréales alimentaire, de blé ou de blé dur ou d'un mélange des deux, modifié par voie mécanique, thermique ou thermomécanique,
- levure
- acide ascorbique
le mélange de ces derniers étant fermenté.

2. Concentré de levain-chef selon la revendication 1, **caractérisé en ce que** le son de céréales alimentaire est de préférence extrudé.

3. Concentré de levain-chef selon la revendication 1 ou 2, **caractérisé en ce que** le son de céréales modifié est extrudé à de 130 à 180 °C, de préférence à 150 °C.

4. Concentré de levain-chef selon la revendication 1 ou 3, **caractérisé en ce que** le son de céréales modifié comporte des particules d'une dimension inférieure à 315 µm, de préférence avec une répartition des dimensions des particules à 95 % < 200 *µ*m, à 73 % < 125 *µ*m, à 54 % < 90 *µ*m, à 22 % < 63 *µ*m, pour l'utilisation pour la fabrication de pâtes brunes.

5. Concentré de levain-chef selon la revendication 1 ou 3, **caractérisé en ce que** le son de blé dur modifié comporte des particules d'une dimension inférieure à 315 µm, de préférence avec une répartition des dimensions des particules à 82 % < 200 µm, à 55 % < 125 µm, à 39 % < 90 µm, à 21 % < 63 µm, pour l'utilisation pour la fabrication de pâtes brunes ou blanches.

6. Concentré de levain-chef selon l'une quelconque des revendications précédentes, **caractérisé en ce que** la part de son de céréales modifié correspond à de 6 à 50 %, de préférence à 35 % à un concentré pâteux de levain-chef et à 23 % à une suspension de concentré de levain-chef.

7. Concentré de levain-chef selon la revendication 1, **caractérisé en ce que** le son de céréales modifié est un son résiduel réduit dans la part de fleur de blé ou libéré de la part de fleur de blé.

8. Concentré de levain-chef selon la revendication 7, **caractérisé en ce que** la part en son résiduel correspond à de 4 à 30 %, de préférence à 15 % à un concentré pâteux de levain-chef et à 10 % à une suspension de concentré de levain-chef.

9. Concentré de levain-chef selon l'une quelconque des revendications précédentes, **caractérisé en ce qu'**il comporte de la farine de malt, du gluten, un complexe d'enzymes d'amylase et de l'eau.

10. Concentré de levain-chef selon l'une quelconque des revendications précédentes, **caractérisé en ce que** le levain est de la levure pressée (environ 29 % de substance sèche (TS) ou du levain liquide (20 % de TS) ou le filtrat récupéré lors de la fabrication de la levure pressée ou un mélange de ces derniers.

11. Procédé de fabrication d'un concentré de levain-chef selon l'une quelconque des revendications précédentes 1 à 10, **caractérisé en ce qu'**on mélange du son de blé traité au moins par voie mécanique, thermique ou thermomécanique, de la levure et de l'acide ascorbique, la consistance pouvant aller d'une suspension coulante jusqu'à une pâte solide, une fermentation de jusqu'à 72 heures à température décroissante suivant l'opération de mélange.

12. Procédé selon la revendication 11, **caractérisé en ce que** la fermentation est fortement inhibée par refroidissement à de 2 à 6 °C.

13. Procédé selon la revendication 11 ou 12, **caractérisé en ce qu'**après l'opération de mélange, un réchauffement du concentré de levain-chef à de 26° à 32 °C maximum est autorisé et qu'en un laps de temps de 72 heures on procède à un refroidissement de la température de la pâte d'environ 2 à 5 °C.

14. Produits de boulangerie totalement ou partiellement fermenté au levain, comprenant au moins des produits céréaliers et de l'eau, **caractérisés en ce qu'**ils sont cuits à partir d'une pâte finale comprenant un concentré de levain-chef selon l'une quelconque des revendications 1 à 10.

15. Produits de boulangerie, notamment pains et pizzas selon la revendication 14, **caractérisés en ce qu'**ils sont cuits à partir d'une pâte finale comprenant du sel, de la farine et de l'eau et un concentré de levain-chef selon l'une quelconque des revendications 1 à 10.

16. Procédé de fabrication de produits de boulangerie totalement ou partiellement fermentés au levain, **caractérisé en ce qu'**on mélange un concentré de levain-chef selon l'une quelconque des revendications précédentes 1 à 5 avec au moins des produits céréaliers et de l'eau en une pâte finale et on le met en oeuvre en traitement direct de la pâte.

17. Procédé de fabrication de pain et de pizza selon la revendication 16, **caractérisé en ce qu'**on mélange un concentré de levain-chef selon l'une quelconque des revendications précédentes 1 à 10 avec au moins du sel, des produits céréaliers et de l'eau en une pâte finale et on le met en oeuvre par traitement direct de la pâte.

18. Procédé selon la revendication 16, **caractérisé en ce que** la part en concentré de levain-chef dans la quantité de farine est de 2 % à 8 % dans la pâte totale.
